# EUROPEAN PATENT SPECIFICATION

(11) **EP 3 111 141 B1**
(45) Date of publication and mention of the grant of the patent: **28.06.2017**
(21) Application number: 14723493.4
(22) Date of filing: 23.01.2014
(51) Int. Cl.: F23N 1/00, F16K 39/02, F16K 1/44, F16K 31/06

(54) **VALVE FOR FLUIDS**
VENTIL FÜR FLUIDE
VANNE POUR FLUIDES

(43) Date of publication of application: 04.01.2017
(73) Proprietor: Idea S.p.A., 37049 Villa Bartolomea (IT)
(72) Inventor: GIORDANO, Bruno, I-37049 Villa Bartolomea (Verona) (IT); GIRALDO, Morgan, I-35020 Codevigo (Padova) (IT)
(74) Representative: Anselmi, Davide
(86) International application number: PCT/IT2014/000022
(87) International publication number: WO 2015/111088

(56) References cited:
- DE-A1-102004 044 439
- JP-U- S63 184 281
- US-A- 5 810 030
- US-A1- 2006 172 237
- US-A1- 2008 076 079
- US-A1- 2009 183 510

## Description

### Technical field

This invention relates to a valve for fluids. Preferably, this valve is used to shut off gas at a burner, but it could be used in any sector to shut off, in general, a fluid. Moreover, this invention relates to a type of valve having one or more consecutive and independent stages.

### Background art

According to the prior art, each of these stages extends, generally, from an inlet opening for the fluid to an outlet opening for the fluid as disclosed in documents US2009/183510, JPS63184281, DE102004044439. Moreover, the inlet opening usually extends along a respective axis of extension substantially at right angles to the direction of propagation of the fluid in the valve. In addition, the valve comprises a shutter operatively associated with the inlet opening and movable between an open position and a closed position of the inlet opening along the axis of extension of the inlet opening. In that way, once it reaches the inlet opening, the fluid acts directly on the surface of the shutter. Consequently, the fluid exerts a pressure on the surface of the shutter tending to open it (if the shutter is positioned below the inlet opening) or obstruct the closing (if the shutter is positioned above the inlet opening).

In that way, the force linked to the movement of the shutter depends on the pressure of the fluid exerted on the surface of the shutter. Thus, it is necessary to apply more or less force depending on the pressure of the fluid exerted on the surface of the shutter.

For example, electromagnetic or pneumatic systems or electromagnetic and pneumatic systems combined together are preferably used for moving the shutter.

In the case of electromagnetic shutters, the shutter is moved by an electromagnetic attraction between a ferromagnetic part, usually mounted on the shutter, and an electromagnetic circuit associated with the frame of the valve. In the case of pneumatic shutters, the shutter is moved by a pneumatic cylinder.

In any case, the force currently needed for opening a shutter is given not only by the force component linked to physical movement of the shutter (linked mainly to the elastic means which keep the shutter in the closed position), but also by the force component needed to resist the pressure exerted by the gas on the closed shutter.

Thus, this prior art technique has several drawbacks.

More specifically, the main drawback is linked to the fact that, as just described, to open the shutter it is necessary to apply a force given by the sum of the force needed to move the shutter (again linked to the elastic means which keep the shutter in the closed position) and the force needed to resist the pressure of the gas. Consequently, it is necessary to provide sufficient energy to the shutter movement systems to perform a complete movement. However, in some cases, the quantity of energy to be supplied is high, especially in an apparatus comprising a plurality of valves.

In this situation, the aim of this invention is to provide a valve for fluids which overcomes the above-mentioned drawbacks.

### Disclosure of the invention

In particular, the aim of this invention is to provide a valve for fluids which makes it possible to reduce the amount of force necessary for opening the shutter.

Consequently, it is also the aim of this invention to provide a valve for fluids which makes it possible to reduce the energy consumption needed for moving the shutter.

Lastly, the aim of this invention is to provide a valve for fluids which makes it possible to separate the amount of force needed to open the shutter from the conditions (pressure, etc.) of the fluid which acts on the shutter. The aims indicated are substantially achieved by a valve for fluids as described in the appended claims.

### Brief description of the drawings

Further characteristic features and advantages of this invention will emerge more clearly from the detailed description of several preferred, but not exclusive embodiments of a valve for fluids illustrated in the accompanying drawings, in which:
- Figure 1 is an axonometric view of a valve for fluids according to this invention;
- Figure 2 shows a top view of the valve for fluids of Figure 1, in a cross-section in a plane at right angles, in a first operating position;
- Figure 3 shows a front view of the valve of Figure 2 in a second operating position;
- Figure 4 shows a top view of the valve of Figure 2 in a third operating position;
- Figure 5 is an axonometric view of an enlargement of the valve of Figure 2; and
- Figure 6 shows a front view of an alternative embodiment of the valve for fluids of Figure 2.

### Detailed description of the preferred embodiments of the invention

With reference to the accompanying drawings, the numeral 1 denotes in its entirety a valve for fluids according to this invention. Reference will be made below mainly to the use of the valve 1 for gas (as it is the preferred fluid for this invention) but without limiting the invention to that fluid.

The valve 1 extends between an inlet duct 2 of the fluid and an outlet duct 3 of the fluid along a main direction of extension 4. The main direction of extension 4 also forms the main direction of propagation of the fluid. Moreover, the valve 1 has an inlet opening 6 extending along a respective axis of extension 12 and an outlet opening 7 extending along a respective axis of extension 4 (coinciding with the main axis of extension 4) positioned transversally to the axis of extension 4 of the inlet opening 6. Preferably, the axis of extension 4 of the outlet opening 7 is positioned at right angles to the axis of extension 12 of the inlet opening 6.

More specifically, the inlet duct 2 has an end portion 8 superposed on the inlet opening 6 and extending along a direction at right angles to the axis of extension 12. In other words, the end portion 8 of the inlet duct 2 is in communication with the inlet opening 6. In yet other words, the end portion 8 of the inlet duct 2 is positioned between an upper wall 9 of the valve 1 and the inlet opening 6.

In effect, the inlet opening 6 extends along a direction transversal (preferably orthogonal) to the main direction of extension 4. In that way, for the gas to pass from the inlet duct 2 through the inlet opening 6 it must turn through a right angle.

Moreover, the outlet opening 7 extends along the main direction of extension 4. In that way, once the gas has passed through the inlet opening 6 it must turn through approximately a right angle to leave from the outlet opening 7.

In addition, the valve 1 comprises a shutter 11 operatively associated with the inlet opening 6 and movable between a closed position and an open position of the inlet opening 6 along a direction of movement 12 transversal to the main direction of extension 4 and parallel to the axis of extension 12 of the inlet opening 6. Preferably, the shutter 11 acts below the inlet opening 6, according to the axis of extension 12, and has a diameter greater than that of the inlet opening 6 in such a way as to close it for capping.

In accordance with this invention, the shutter 11 defines a gap 33 placed in fluid communication with the inlet opening 6 and extending through the shutter 11 towards a transient space 32 which is closed, at least during the closed position of the shutter, with respect to the outlet opening 7. The transient space 32 extends along the axis of extension 12 from a bottom wall 10 of the valve to a contact surface 51 inside the shutter 11 in such a way that the fluid penetrates from the inlet opening 6 towards the transient space 32 through the gap 33 and acts on the shutter 11 in the opposite direction to the fluid acting directly on the shutter from the inlet opening 6. In other words, the transient space 32 extends on the opposite side relative to the shutter 11 according to the axis of extension 12 of the inlet opening 6. In this way, during use, the fluid penetrates through the gap 33 inside the shutter 11 and then into the transient space 32. Advantageously, the pressure of the fluid on the shutter 11 at the inlet opening 6 is partly discharged through the gap 32 in such a way as to reduce the amount of force needed to keep the shutter 11 abutting against the inlet opening 6 in the closed position.

It should be noted that the shutter 11 has a through hole 22 which places the inlet opening 6 in communication with the transient space 32. The gap 33 is at least partly formed in the through hole 22. More specifically, the valve comprises a movement unit 15 of the shutter 11 movable along the axis of extension 12 of the inlet opening 6 and operatively associated with the shutter for moving it.

More specifically, the movement unit 15 is inserted inside the through hole 22 and the gap 33 is formed between the movement unit 15 and the through hole 22.

Preferably, the movement unit 15 comprises a rod 16 extending between a respective operating portion 17 which can engage the shutter 11 for moving it and a respective drive portion 18 opposite to the operating portion 17.

More specifically, the rod 16 is inserted through the through hole 22 present on the shutter 11. In other words, the rod 16 passes through the shutter 11. It should be noted that the through hole 22 of the shutter 11 has a greater width than the respective width of the rod 16 (measured perpendicularly to the direction of movement 12) in such a way as to leave the gap 33 between the shutter 11 and the rod 16 for the passage of the fluid when the further shutter 13 is open and the shutter 11 is closed. Moreover, the gap 33 allows the sliding of the rod 16 relative to the shutter 11 in such a way that the rod 16 can be moved irrespective of the movement of the shutter 11.

Moreover, the movement unit 15 comprises pulling means 23 fixed to the operating portion 17 of the rod 16 for pulling the shutter 11 from the closed position to the open position. More in detail, the pulling means 23 comprise a stop fixed to the operating portion 17 of the rod 16 and projecting laterally to it. More specifically, the stop protrudes laterally for a length greater than the space between the shutter 11 and the rod 16 according to a direction perpendicular to the direction of movement 12 in such a way as to pull the shutter 11 during the movement of the rod 16 according to a second direction 21 from the inlet opening 6 towards the bottom wall 10. Preferably, the stop is a washer fixed to the rod 16 at a suitable seat. Alternatively, the stop may be defined by a suitable protrusion formed on the profile of the rod 16.

Moreover, the valve 1 comprises first sealing means 24 and second sealing means 25 positioned between the shutter 11 and the outlet opening 7. The second sealing means 25 are spaced from the first sealing means 24 along a direction away from the first sealing means 24.

It should be noted that between the inlet opening 6 and the outlet opening 7 there is a widening 26. In other words, at the height of the outlet opening 7, according to the direction of movement 12, there is the widening 26. More specifically, the widening 26 defines a space for detachment from the shutter 11 placed in fluid communication with the outlet opening 7.

It should be noted that between the inlet opening 6 and the detachment space there is a first passage 27; between the bottom wall 10 and the detachment space there is a second passage 28. Consequently, the first sealing means 24 operate on the first passage 27, while the second sealing means 25 operate on the second passage 28 in such a way that the gas does not pass (during the closed position of the shutter 11) in the detachment space.

Moreover, the second sealing means 25 comprise a first part 29 connected to the intermediate chamber 5 and a second part 30 connected to the shutter 11. The first and second parts 30 of the second sealing means 25 have an annular extension around the shutter 11.

It should be noted that the second passage 28 is defined between the intermediate chamber 5 and the shutter 11 at the second sealing means 25.

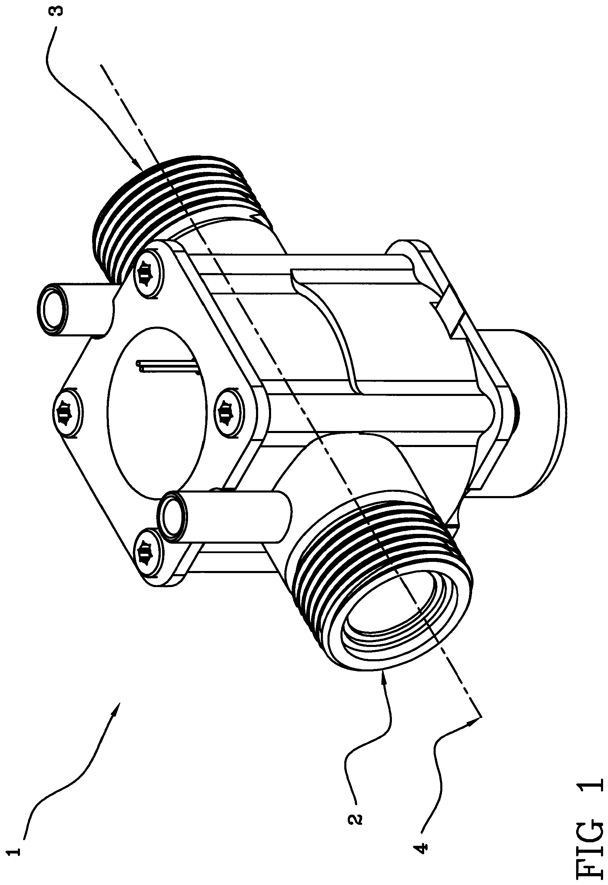

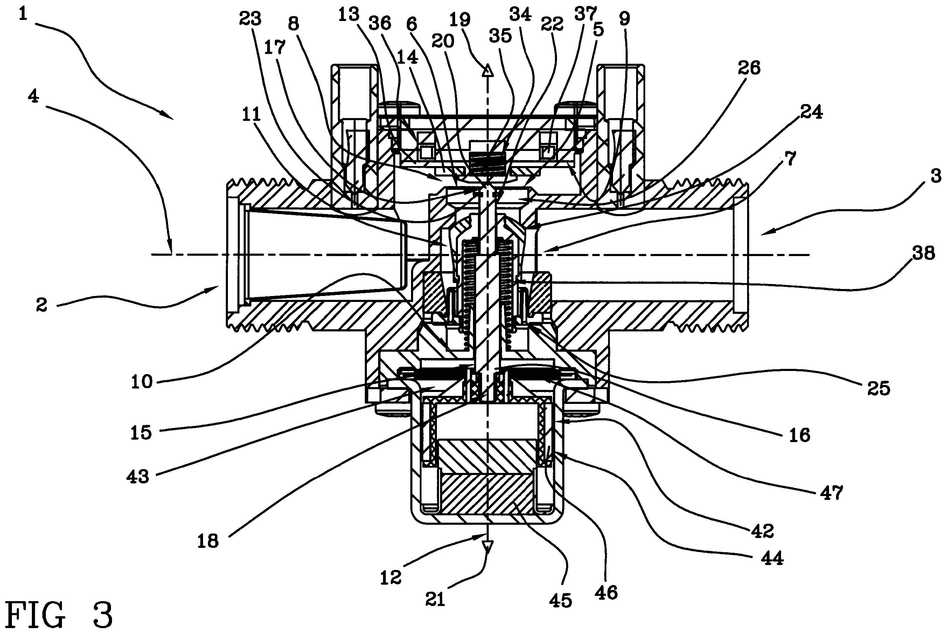

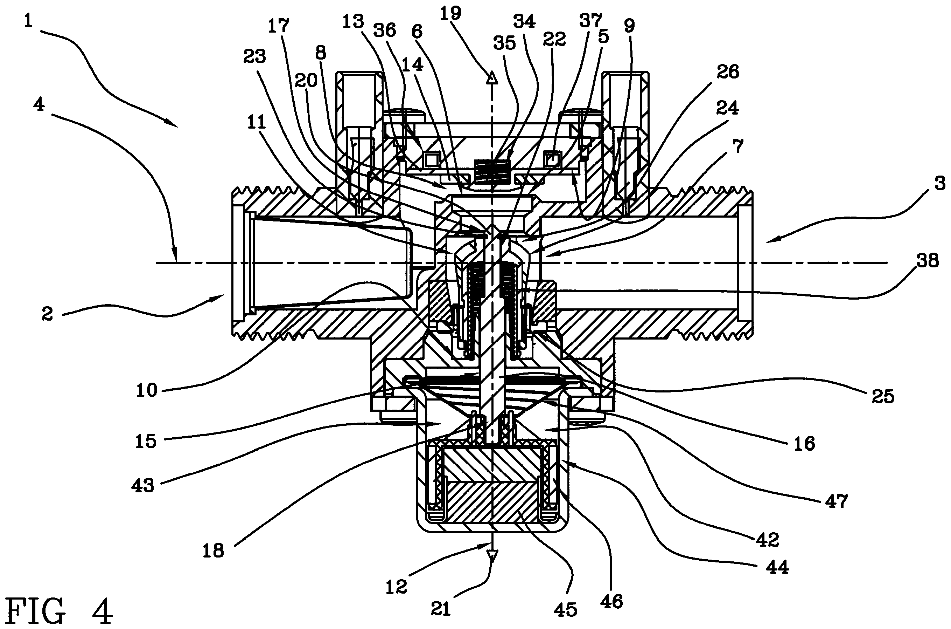

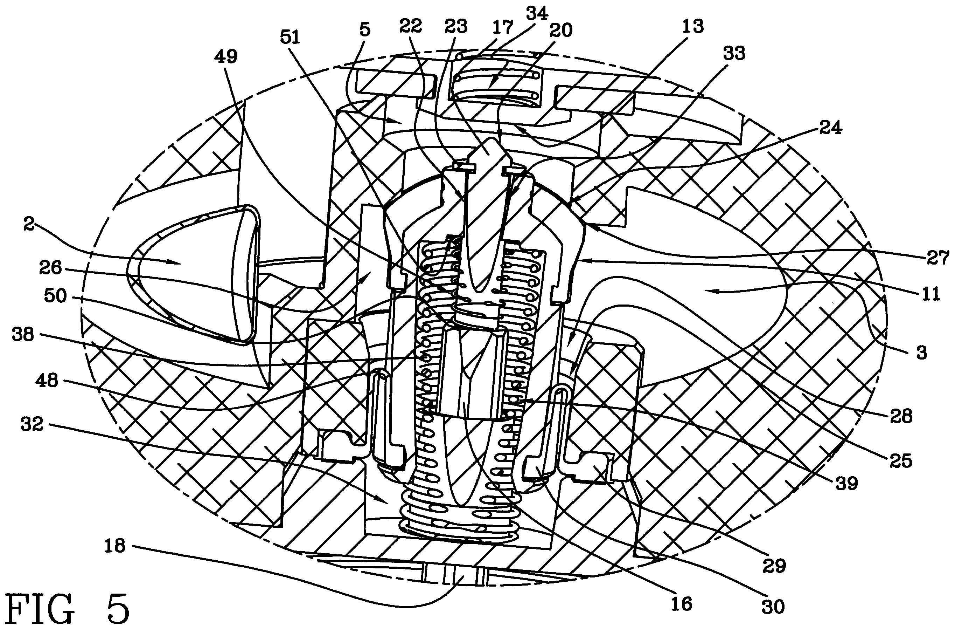

In the preferred embodiment illustrated in figures 1 to 5, the first 29 and the second part 30 of the second sealing means 25 comprise a single body and are connected together by a flexible portion 48 with an inverted U shape. Moreover, in this preferred embodiment, the first sealing means 24 and the second part 30 of the second sealing means 25 comprise separate bodies.

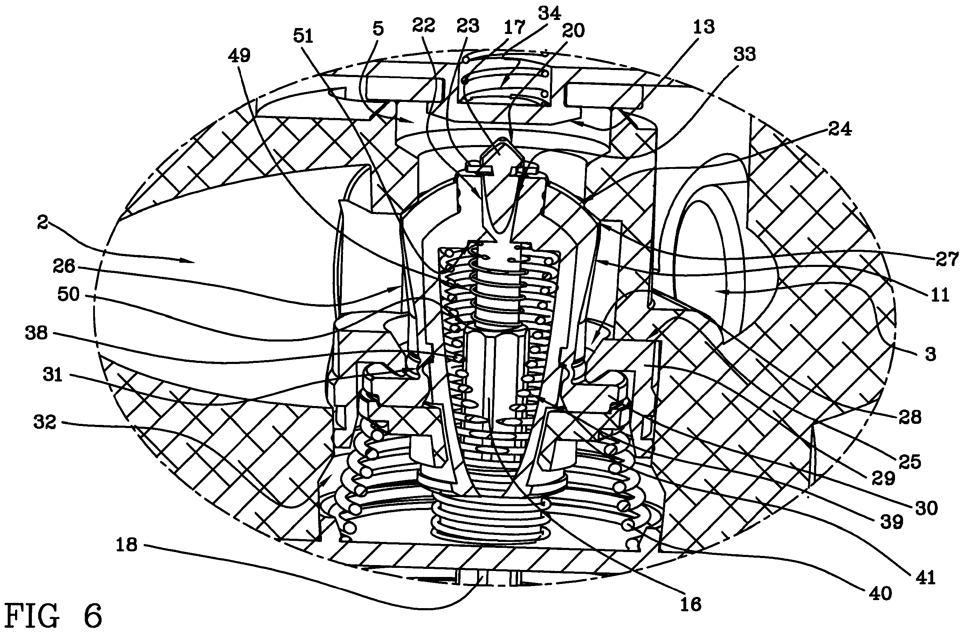

In an alternative embodiment illustrated in Figure 6, the first sealing means 24 and the second part 30 of the second sealing means 25 comprise a single body. In this embodiment, between the first sealing means 24 and the second part 30 of the second sealing means 25 there is an annular portion 31 of weakness forming a flexible zone of the sealing means. The annular portion 31 of weakness is advantageously configured to compensate for any dimensional differences of the single body located between the first sealing means 24 and the second part 30 of the second sealing means 25.

Moreover, the first 29 and the second part 30 of the second sealing means 25 are separate bodies. More specifically, the second part 30 of the second sealing means 25 has a part protruding along a direction transversal to the direction of movement 12. The first part 29 of the second sealing means 25 also has a respective protruding part to be coupled to the protruding part of the second sealing means 25 during the closed position of the shutter 11. It should be noted that the first part 29 of the second sealing means 25 forms at the centre the second passage 28.

As already mentioned, the transient space 32 extends away from the first sealing means 24. The transient space 32 is in fluid communication, during the closed position of the shutter 11, with the inlet opening 6 through the gap 33. More specifically, the transient space 32 extends from the bottom wall 10 to the second passage 28.

In that way, during the closed position of the shutter 11, the gas flows through the gap 33 in such a way as not to exert pressure (or exert a reduced pressure) on the shutter 11 along the second direction 21. In other words, the pressure of the gas disperses through the gap 33 and by the passage of the gas in the transient space 32.

Moreover, the valve 1 comprises first elastic means 38 positioned between the shutter 11 and the bottom wall 10. The first elastic means 38 are extended during the closed position of the shutter 11 and compressed during the open position of the shutter 11 in such a way as to facilitate the return of the shutter 11 from the open position to the closed position. Moreover, the first elastic means 38 are designed to keep the shutter 11 in the closed position. It should be noted that the first elastic means 38 extend in an inner cavity 39 of the shutter 11. In effect, the shutter 11 substantially has an inverted U shape wherein the opening of this U shape is directed towards the bottom wall 10. The shape of the shutter 11 forms the inner cavity 39 in which the first elastic means 38 are at least partly positioned. In other words, the first elastic means 38 extend along the direction of movement 12. More in detail, the first elastic means 38 are positioned around the rod 16. Preferably, the first elastic means 38 comprise a helical spring inside of which the rod 16 passes. Thus, the spring also extends inside the inner cavity 39 of the shutter 11.

Moreover, in the alternative embodiment illustrated in Figure 6, the valve 1 according to this invention comprises second elastic means 40 positioned between the second part 30 of the second sealing means 25 and the bottom wall 10 on the opposite side relative to the further shutter 13. The second elastic means 40 are at least partly compressed in such a way as to keep the second part 30 of the second sealing means 25 abutted against the first part 29 of the second sealing means 25 during the closed position of the shutter 11. In other words, the second elastic means 40 act between the bottom wall 10 and the second part 30 of the second sealing means 25 along the direction of movement 12. In that way, when the shutter 11 is in the closed position, the second elastic means 40 keep the second part 30 of the second sealing means 25 abutted against the first part 29 of the second sealing means 25, when the shutter 11 moves from the closed position to the open position the second elastic means 40 are compressed in such a way as to generate a passage between the second part 30 of the second sealing means 25 and the first part 29 of the second sealing means 25. Preferably, as shown in Figure 6, the second elastic means 40 comprise a helical spring and an annular support 41. The annular support 41 rests on the second part 30 of the second sealing means 25 and surrounds the shutter 11 in such a way as to define a support for the helical spring. The helical spring is inserted between the bottom wall 10 and the annular support 41 so as not act directly on the second part 30 of the second sealing means 25, but on the annular support 41. It should be noted that the annular support 41 is movable along the direction of movement 12. More specifically, the annular support 41 is movable according to a predefined stroke and delimited by stops made on the shutter 11.

In the preferred embodiment illustrated in Figures 1 to 5, the second elastic means 40 are not present since the flexible portion 48 keeps the first 29 and the second part 30 of the second sealing means 25 connected together.

Further, it should be noted that both the embodiments of the valve comprise third elastic means 49 positioned between a wide portion 50 of the rod 16 positioned in the inner cavity 39 and a contact surface 51 of the shutter 11 delimiting the inner cavity 39 along the direction of movement 12 according to the first direction 19. The wide portion 50 of the rod 16 defines a step for retaining the third elastic means 49 in such a way as to lock them in position. Advantageously, the third elastic means 49 allow the pushing means 23 to be kept in contact with the shutter 11 during the closed position.

In addition, the valve 1 comprises means 42 for driving the rod 16 associated with the drive portion 18 of the rod 16. More specifically, the means 42 for driving the rod 16 are positioned in a service compartment 43 of the valve 1 made between the bottom wall 10 and a lower wall of the valve 1 opposite the upper wall 9 along the direction of movement 12.

It should be noted that the valve 1 extends along the direction of movement 12 between the upper wall 9 and the lower wall.

More specifically, the means 42 for driving the rod 16 are configurable between a rest condition, a first operating condition and a second operating condition. During the rest condition, the shutter 11 is in the closed position and the pushing end 20 of the rod 16 is positioned between the shutter 11 and the further shutter 13. During the first operating condition, the rod 16 moves along the direction of movement 12 in the first direction 19 in such a way as to move the further shutter 13 towards the upper wall 9 (to move it from the closed position to the open position).

During the second operating condition, the rod 16 moves along the direction of movement 12 in the second direction 21 in such a way as to move the shutter 11 towards the bottom wall 10 (to move it from the closed position to the open position).

More specifically, the drive means 42 comprise an electromagnetic element 44 to move the rod 16 along the first direction 19 or along the second direction 21. The electromagnetic element 44 is inserted inside the service compartment 43 and is associated with the drive portion 18 of the rod 16. In other words, the rod 16 passes through the bottom wall 10 and is partly inserted in the service compartment 43.

Still more specifically, the electromagnetic element 44 comprises a magnet 45 fixed in position relative to the rod 16 and an electromagnetic circuit 46 connected to the drive portion 18 of the rod 16. In other words, the electromagnetic circuit 46 moves relative to the magnet 45 towards or away from it. Preferably, the electromagnetic circuit 46 is movable (by moving the rod 16), depending on the direction of the electrical current, from the rest condition to the first operating condition or to the second operating condition and vice versa.

In addition, the electromagnetic circuit 46 comprises an electricity power cable 47 extending inside the service compartment 43 towards an outlet opening 7 put in communication between the service compartment 43 and the outside of the valve 1 for connection to an electrical power source. The power cable 47 is positioned between the bottom wall 10 and the rest of the electromagnetic circuit 46 and is wound in the form of a spiral in such a way as to reduce the interference with the movement of the rest of the electromagnetic circuit 46 relative to the magnet 45 fixed in position. The drive means 42 of the rod 16 comprise a voice-coil type system which is preferably made also by the winding of the power cable 47 in the form of a spiral.

In addition, it should be noted that in the accompanying drawings, the valve 1 comprises a further stage located upstream of the inlet opening 6. Alternatively, the further stage could be located downstream of the outlet opening 7.

More specifically, the further stage comprises an intermediate chamber 5 interposed between the two stages and forming a communication space.

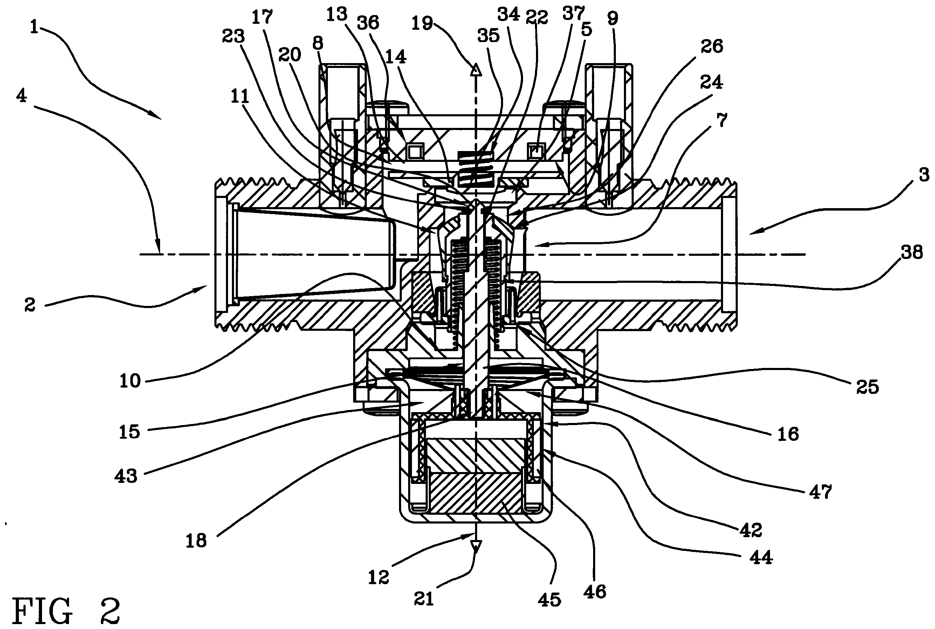

Figure 2 shows that the intermediate chamber 5 extends transversally relative to the main direction of extension 4. Preferably, the intermediate chamber 5 extends at right angles to the main direction of extension 4.

It should also be noted that the intermediate chamber 5 extends away from the inlet opening 6 (along a direction transversal to the main direction of extension 4) to the bottom wall 10 which delimits the intermediate chamber 5.

In addition, the valve 1 comprises a further shutter 13 operatively associated with the inlet opening 6 and movable between a closed position and an open position of the inlet opening 6 along the direction of movement 12 transversal to the main direction of extension 4. Preferably, the shutter 13 is positioned above the inlet opening 6 according to the axis of extension 12.

More in detail, the further shutter 13 comprises a plate extending at right angles to the axis of extension 12 of the inlet opening 6. In addition, the further shutter 13 comprises an annular sealing gasket 14 positioned on the plate and facing the inlet opening 6 and shaped in a fashion similar to the edge of the inlet opening 6 in such a way as to close the passage during the closed position of the further shutter 13.

It should be noted that the direction of movement 12 is preferably at right angles to the main direction of extension 4.

Moreover, the further shutter 13 and the shutter 11 are mutually superposed along the direction of movement 12. In other words, the further shutter 13 moves in the end portion 8 of the inlet duct 2, whilst the shutter 11 moves between the inlet opening 6 and the outlet opening 7. In any event, the shutter 11 is movable along the direction of movement 12. In other words, the shutter 11 moves along the same direction of movement 12 of the further shutter 13. In yet other words, the further shutter 13 and the shutter 11 move coaxially even if independently with regard to the direction of movement (as will be explained in more detail below).

More specifically, the movement unit 15 is in common to both the shutters and is movable along the direction of movement 12 for moving each shutter.

In the preferred embodiment, the movement unit 15 is defined by the rod 16 in which the operating portion 17 can be engaged with the further shutter 13 or the shutter 11 to move them and a respective drive portion 18 opposite to the operating portion 17.

It should be noted that the rod 16 is movable along the direction of movement 12 in a first direction 19 for moving the further shutter 13 from the closed position to the open position. The first direction 19 is directed towards the upper wall 9 to open the further shutter 13. More specifically, the operating portion 17 of the rod 16 has a pushing end 20 facing the upper surface and able to abut against the further shutter 13 for pushing it from the closed position to the open position. In other words, the pushing end 20 pushes the further shutter 13 away from the intermediate chamber 5 forming a passage for the gas through the inlet opening 6.

Moreover, the rod 16 is movable along the direction of movement 12 according to a second direction 21 opposite to the first direction to move the shutter 11 from the closed position to the open position in such a way that the movement of a shutter is independent of the movement of the other shutter. In other words, the movement of the further shutter 13 is independent of the movement of the shutter 11. In effect, this independence of the movements is given by the fact that for moving a shutter it is necessary for the rod 16 to move in a direction opposite to the movement for the other shutter. In that way, it should also be noted that the time the further shutter 13 remains in the closed position is independent of the time the shutter 11 remains in the closed position. More in detail, the pulling means 23 fixed to the operating portion 17 of the rod 16 move the shutter 11 from the closed position to the open position, by pulling.

Moreover, the valve 1 comprises fourth elastic means 34 positioned between the further shutter 13 and the upper wall 9 of the valve 1. The fourth elastic means 34 are extended during the closed position of the further shutter 13 and compressed during the open position of the further shutter 13 in such a way as to facilitate the return of the further shutter 13 from the open position to the closed position. Moreover, the fourth elastic means 34 are advantageously configured to keep the further shutter 13 abutted against the rod 16 during the passage from the open position to the closed position. Preferably, the fourth elastic means 34 are positioned in contact with the further shutter 13 at a suitable recess 35 formed on the further shutter 13 and which faces the upper wall 9 of the valve 1.

In the preferred embodiment, the fourth elastic means 34 comprise a helical spring.

Moreover, the valve 1 comprises means 36 for magnetic attraction positioned between the upper wall 9 and the further shutter 13 and configurable between an active condition and an inactive condition. Preferably, the magnetic attraction means 36 comprise an electromagnet 37 located at the upper wall 9 and ferromagnetic material positioned on the further shutter 13. Even more preferably, the electromagnetic material could be incorporated in the further shutter 13.

In that way, activating the electromagnet 37 (passing from the inactive condition to the active condition) generates an electromagnetic field which involves the ferromagnetic material present in the further shutter 13 so as to attract the further shutter 13 towards the upper wall 9. In an alternative embodiment not illustrated in the accompanying drawings, the electromagnet 37 could be positioned on the further shutter 13 whilst the ferromagnetic material could be positioned on the upper wall 9.

During the active condition the magnetic attraction means 36 are configured for attracting the further shutter 13 towards the upper wall 9 when the further shutter 13 is moving from the closed position towards the open position and when the distance between the further shutter 13 and the upper wall 9 is less than the distance between the further shutter 13 during the rest position and the upper wall 9. In other words, the magnetic attraction means 36 are configured to act on the further shutter 13 only after the latter has started to move from the closed position towards the open position. In yet other words, the magnetic attraction means 36 act when the distance between the further shutter 13 and the upper wall 9 is less than a predetermined minimum distance. In effect, the magnetic attraction means 36 are configured to generate a magnetic field which can move the further shutter 13 only when the latter is at a distance from the upper wall 9 less than the distance between the further shutter 13 during the rest position and the upper wall 9. The distance is the above-mentioned predetermined minimum distance.

Advantageously, this configuration of the magnetic attraction means 36 makes it possible to reduce the amount of energy necessary to fully move the further shutter 13 from the closed position to the open position, because the electromagnetic field generated is able to operate only at distances of less than the predetermined minimum distance. In addition, the magnetic attraction means 36 are configured to keep the further shutter 13 abutted against the upper wall 9 during the open position in such a way as to keep the further shutter 13 open.

As regards the operation of this invention, it may be derived directly from the description above.

More specifically, the opening of the valve 1 comprises moving the rod 16 along the first direction 19 using a suitable command to the electromagnetic circuit 46 in such a way as to move the further shutter 13 from the closed position towards the open position. During this movement (or before) the magnetic attraction means 36 are activated in such a way as to complete the movement of the further shutter 13 from the closed position to the open position. More specifically, the magnetic attraction means 36 attract the further shutter 13 towards the upper wall 9 in such a way as to definitively open the first stage. In other words, the movement of the further shutter 13 occurs at two successive points in time: during a first instant, the rod 16 moves the further shutter 13 close to the upper wall 9; during a second instant, the magnetic attraction means 36 complete the movement of the further shutter 13 towards the upper wall 9.

After the opening of the further shutter 13, the magnetic attraction means 36 are kept active in such a way that the further shutter 13 remains in the open position. During the opening movement of the further shutter 13, the fourth elastic means 34 are compressed while the first elastic means 38 and the second elastic means 40 keep the shutter 11 in the closed position.

Once the further shutter 13 is open, the gas enters through the inlet opening 6 into the intermediate chamber 5 and penetrates into the gap 33 arriving at the transient space 32. However, until the shutter 11 is opened, the gas is locked inside the intermediate chamber 5 (and inside the transient space 32) thanks to the presence of the first sealing means 24 and second sealing means 25.

Then, the rod 16 is moved from the first operating condition to the second operating condition, in the second direction 21. In this way, the pulling means 23 associated with the operating portion 17 of the rod 16 move the shutter 11 from the closed position to the open position generating a passage for the gas from the gap to the outlet duct 3. During this movement, the first elastic means 38 and the second elastic means 40 are compressed. After the opening of the shutter 11, the gas can pass through the valve 1.

This invention achieves the preset aims.

More specifically, this invention makes it possible to reduce the amount of force necessary for opening the shutter since the gas passing through it does not exert a force (or it is exerted to a limited extent) opposing or favourable to the movement of the shutter from the closed position to the open position. In other words, the amount of force needed to open the shutter is substantially independent of (or influenced to a limited extent by) the conditions (pressure, etc.) of the fluid which acts on the shutter. Consequently, the energy consumption needed for moving the shutter is also reduced.

Lastly, it should be noted that this valve makes it possible to obtain a greater degree of safety in the tests for certifying the valve since by introducing the gas under pressure from the outlet duct (as specified for the tests in question) the gases exerts a force on the shutter in a radial direction relative to the direction of movement of the shutter. Consequently, the introduction of the gas at the outlet duct is substantially uninfluential on the opening and/or closing of the shutter in such a way as to lock the passage of the gas and guarantee a greater seal.

It should also be noted that this invention is relatively easy to produce and that even the cost connected with implementing the invention is not very high.

## Claims

1. A valve (1) for fluids, comprising:
- an inlet opening (6) of a fluid extending along a respective axis of extension (12);
- an outlet opening (7) of the fluid extending along a respective axis of extension (4) positioned transversally to the axis of extension (12) of the inlet opening (6);
- a shutter (11) operatively associated with the inlet opening (6) and movable between an open position and a closed position of the inlet opening (6) along the axis of extension (12) of the latter;
- a unit (15) for moving the shutter (11) along the axis of extension (12) of the inlet opening (6) and operatively associated with the shutter for moving it; the movement unit (15) comprising a rod (16) extending between a respective operating portion (17) which can engage the shutter (11) for moving it and a respective drive portion (18) opposite to the operating portion (17);
- the shutter (11) defines a gap (33) placed in fluid communication with the inlet opening (6) and extending through the shutter (11) towards a transient space (32) which is closed, at least during the closed position of the shutter, with respect to the outlet opening; the transient space (32) extending along the axis of extension (12) from a bottom wall (10) of the valve to a contact surface (51) inside the shutter (11) in such a way that the fluid penetrates from the inlet opening (6) towards the transient space (32) through the gap (33) and acts on the shutter (11) in the opposite direction to the fluid acting directly on the shutter from the inlet opening (6);
- **characterised in that** it comprises means (42) for driving the rod (16) associated with the drive portion (18) of the rod (16); the drive means (42) comprising an electromagnetic element (44) to move the rod (16) along a first direction (19) or along a second direction (21); and **in that** the drive means (42) of the rod (16) comprise a voice-coil type system.

2. The valve (1) for fluids according to claim 1, **characterised in that** the shutter (11) has a through hole (22) which places the inlet opening (6) in communication with the transient space (32); the gap (33) being at least partly formed in the through hole (22).

3. The valve (1) for fluids according to any one of the preceeding claims, when it depends on claim 2, **characterised in that** the movement unit (15) is inserted inside the through hole (22) and the gap (33) is formed between the movement unit (15) and the through hole (22).

4. The valve (1) for fluids according to claim 3, **characterised in that** the movement unit (15) comprises a rod (16) extending between a respective operating portion (17) which can engage the shutter (11) for moving it and a respective drive portion (18) opposite to the operating portion (17); the through hole (22) having a width which is greater than a respective width of the rod (16) in such a way as to leave a gap (33) between the shutter (11) and the rod (16) for the passage of the fluid.

5. The valve (1) for fluids according to claim 4, **characterised in that** the movement unit (15) comprises pulling means (23) fixed to the operating portion (17) of the rod (16) for pulling the shutter (11) from the closed position to the open position.

6. The valve (1) for fluids according to claim 5, **characterised in that** it comprises first sealing means (24) and second sealing means (25) positioned between the shutter (11) and the outlet opening (7); the second sealing means (25) being spaced relative to the first sealing means (24) along the axis of extension (12) of the inlet opening (6).

7. The valve (1) according to claim 6, **characterised in that** the second sealing means (25) comprise a first part (29) connected to the intermediate chamber (5) and a second part (30) connected to the shutter (11).

8. The valve (1) according to claim 7, **characterised in that** the second part (30) of the second sealing means (25) has a part protruding along a direction transversal to the direction of movement (12); the first part (29) of the second sealing means (25) having a protruding part to be coupled to the protruding part of the second sealing means (25) during the closed position of the shutter (11).

9. The valve (1) according to claim 7 or 8, **characterised in that** the first sealing means (24) and the second part (30) of the second sealing means (25) comprise separate bodies.

10. The valve (1) according to claim 7 or 8 , **characterised in that** the first sealing means (24) and the second part (30) of the second sealing means (25) are formed by a single body; between the first sealing means (24) and the second part (30) of the second sealing means (25) there is an annular portion (31) of weakness forming a flexible zone of the sealing means.

11. The valve (1) according to any one of the preceding claims, **characterised in that** it comprises elastic means (38) positioned between the shutter (11) and the bottom wall (10) of the transient space (32); the elastic means (38) being extended during the closed position of the shutter (11) and compressed during the open position of the shutter (11) in such a way as to facilitate the return of the shutter (11) from the open position to the closed position.

12. The valve (1) according to any of the claims dependent on claim 7, **characterised in that** it comprises second elastic means (40) positioned between the second part (30) of the second sealing means (25) and the bottom wall (10); the second elastic means (40) being at least partly compressed in such a way as to keep the second part (30) of the second sealing means (25) abutted against the first part (29) of the second sealing means (25) during the closed position of the shutter (11).

13. The valve (1) according to any of the preceding claims that depend on claim 3, **characterised in that** the electromagnetic element (44) comprises a magnet (45) fixed in position relative to the rod (16) and an electromagnetic circuit (46) connected to the drive portion (18) of the rod (16); the electromagnetic circuit (46) being operatively associated with the magnet (45) and movable towards or away from it to move the rod.

14. The valve (1) according to claim 13, **characterised in that** the electromagnetic circuit (46) comprises at least one electricity power cable (47) wound in the form of a spiral around the rod (16) and extending from the outside of the valve towards the electromagnetic circuit (46).

## Patentansprüche

1. Ventil (1) für Fluide, umfassend:
- eine Einlassöffnung (6) für ein Fluid, sich erstreckend entlang einer jeweiligen Ausdehnungsachse (12);
- eine Auslassöffnung (7) für das Fluid, sich erstreckend entlang einer jeweiligen Ausdehnungsachse (4), positioniert quer zur Ausdehnungsachse (12) der Einlassöffnung (6);
- eine Verschlussklappe (11), die betriebswirksam mit der Einlassöffnung (6) assoziiert ist und zwischen einer offenen Position und einer geschlossenen Position der Einlassöffnung (6) entlang deren Ausdehnungsachse (12) bewegbar ist;
- eine Einheit (15) zum Bewegen der Verschlussklappe (11) entlang der Ausdehnungsachse (12) der Einlassöffnung (6), betriebswirksam assoziiert mit der Verschlussklappe für deren Bewegung, wobei die Bewegungseinheit (15) eine Stange (16) umfasst, die sich zwischen einem jeweiligen Betriebsabschnitt (17) erstreckt, der mit der Verschlussklappe (11) in Eingriff gelangen kann, um diese zu bewegen, und einem jeweiligen Antriebsabschnitt (18), der gegenständig zum Betriebsabschnitt (17) angeordnet ist,
- wobei die Verschlussklappe (11) einen Spalt (33) definiert, der in Fluidkommunikation mit der Einlassöffnung (6) steht und sich durch die Verschlussklappe (11) hinführend zu einem Übergangsbereich (32) erstreckt, der zumindest während der geschlossenen Position der Verschlussklappe im Vergleich zur Auslassöffnung geschlossen ist, wobei sich der Übergangsbereich (32) entlang der Ausdehnungsachse (12) von einer Bodenwand (10) des Ventils zu einer Kontaktoberfläche (51) in der Verschlussklappe (11) erstreckt, sodass das Fluid von der Einlassöffnung (6) eindringt und durch den Spalt (33) zum Übergangsbereich (32) strömt und auf die Verschlussklappe (11) in entgegengesetzter Richtung des Fluids wirkt, das direkt von der Einlassöffnung (6) auf die Verschlussklappe wirkt,
- **dadurch gekennzeichnet, dass** es Mittel (42) umfasst, um die Stange (16), die mit dem Antriebsabschnitt (18) der Stange (16) assoziiert ist, anzutreiben, wobei die Antriebsmittel (42) ein elektromagnetisches Element (44) umfassen, um die Stange (16) entlang einer ersten Richtung (19) oder entlang einer zweiten Richtung (21) zu bewegen, und dadurch, dass die Antriebsmittel (42) der Stange (16) ein System vom Schwingspulentyp umfassen.

2. Ventil (1) für Fluide nach Anspruch 1, **dadurch gekennzeichnet, dass** die Verschlussklappe (11) ein Durchführungsloch (22) aufweist, das die Einlassöffnung (6) mit dem Übergangsbereich (32) in Kommunikation setzt, wobei der Spalt (33) mindestens teilweise im Durchführungsloch (22) ausgebildet ist.

3. Ventil (1) für Fluide nach einem der vorhergehenden Ansprüche, wenn abhängig von Anspruch 2, **dadurch gekennzeichnet, dass** die Bewegungseinheit (15) in das Durchführungsloch (22) eingesetzt ist und der Spalt (33) zwischen der Bewegungseinheit (15) und dem Durchführungsloch (22) ausgebildet ist.

4. Ventil (1) für Fluide nach Anspruch 3, **dadurch gekennzeichnet, dass** die Bewegungseinheit (15) eine Stange (16) umfasst, die sich zwischen einem jeweiligen Betriebsabschnitt (17) erstreckt, der mit der Verschlussklappe (11) in Eingriff gelangen kann, um diese zu bewegen, und einem jeweiligen Antriebsabschnitt (18), der gegenständig zum Betriebsabschnitt (17) angeordnet ist, wobei das Durchführungsloch (22) eine Weite aufweist, die größer ist als eine jeweilige Weite der Stange (16), sodass ein Spalt (33) zwischen der Verschlussklappe (11) und der Stange (16) für das Durchströmen des Fluids gelassen wird.

5. Ventil (1) für Fluide nach Anspruch 4, **dadurch gekennzeichnet, dass** die Bewegungseinheit (15) Zugmittel (23) umfasst, die am Betriebsabschnitt (17) der Stange (16) fixiert sind, um die Verschlussklappe (11) von der geschlossenen Position in die offene Position zu ziehen.

6. Ventil (1) für Fluide nach Anspruch 5, **dadurch gekennzeichnet, dass** es erste Dichtungsmittel (24) und zweite Dichtungsmittel (25) umfasst, die zwischen der Verschlussklappe (11) und der Auslassöffnung (7) positioniert sind, wobei die zweiten Dichtungsmittel (25) relativ zu den ersten Dichtungsmitteln (24) entlang der Ausdehnungsachse (12) der Einlassöffnung (6) beabstandet sind.

7. Ventil (1) nach Anspruch 6, **dadurch gekennzeichnet, dass** die zweiten Dichtungsmittel (25) einen ersten Teil (29) umfassen, der mit der Zwischenkammer (5) verbunden ist, und einen zweiten Teil (30), der mit der Verschlussklappe (11) verbunden ist.

8. Ventil (1) nach Anspruch 7, **dadurch gekennzeichnet, dass** der zweite Teil (30) der zweiten Dichtungsmittel (25) einen Teil aufweist, der entlang einer Richtung hervorspringt, die quer zur Bewegungsrichtung (12) verläuft, wobei der erste Teil (29) der zweiten Dichtungsmittel (25) einen hervorspringenden Teil aufweist, der mit dem hervorspringenden Teil der zweiten Dichtungsmittel (25) während der geschlossenen Position der Verschlussklappe (11) zu koppeln ist.

9. Ventil (1) nach Anspruch 7 oder 8, **dadurch gekennzeichnet, dass** die ersten Dichtungsmittel (24) und der zweite Teil (30) der zweiten Dichtungsmittel (25) separate Körper umfassen.

10. Ventil (1) nach Anspruch 7 oder 8, **dadurch gekennzeichnet, dass** die ersten Dichtungsmittel (24) und der zweite Teil (30) der zweiten Dichtungsmittel (25) durch einen einzigen Körper ausgebildet sind, wobei zwischen den ersten Dichtungsmitteln (24) und dem zweiten Teil (30) der zweiten Dichtungsmittel (25) ein ringförmiger Schwächungsabschnitt (31) vorhanden ist, der eine flexible Zone der Dichtungsmittel bildet.

11. Ventil (1) nach einem der vorhergehenden Ansprüche, **dadurch gekennzeichnet, dass** es elastische Mittel (38) umfasst, die zwischen der Verschlussklappe (11) und der Bodenwand (10) des Übergangsbereichs (32) positioniert sind, wobei die elastischen Mittel (38) während der geschlossenen Position der Verschlussklappe (11) gedehnt und während der offenen Position der Verschlussklappe (11) zusammengedrückt werden, sodass die Rückkehr der Verschlussklappe (11) aus der offenen Position in die geschlossene Position erleichtert wird.

12. Ventil (1) nach einem der Ansprüche, die von Anspruch 7 abhängig sind, **dadurch gekennzeichnet, dass** es zweite elastische Mittel (40) umfasst, die zwischen dem zweiten Teil (30) der zweiten Dichtungsmittel (25) und der Bodenwand (10) positioniert sind, wobei die zweiten Dichtungsmittel (40) mindestens teilweise zusammengedrückt sind, sodass der zweite Teil (30) der zweiten Dichtungsmittel (25) während der geschlossenen Position der Verschlussklappe (11) gegen den ersten Teil (29) der zweiten Dichtungsmittel (25) anschlagend beibehalten wird.

13. Ventil (1) nach einem der vorhergehenden Ansprüche, die von Anspruch 3 abhängen, **dadurch gekennzeichnet, dass** das elektromagnetische Element (44) einen Magnet (45) umfasst, der in einer Position relativ zur Stange (16) fixiert ist, und einen elektromagnetischen Kreislauf (46), der mit dem Antriebsabschnitt (18) der Stange (16) verbunden ist, wobei der elektromagnetische Kreislauf (46) betriebswirksam mit dem Magnet (45) assoziiert und hinführend zu diesem oder wegführend von diesem bewegt werden kann, um die Stange zu bewegen.

14. Ventil (1) nach Anspruch 13, **dadurch gekennzeichnet, dass** der elektromagnetische Kreislauf (46) mindestens ein elektrisches Stromkabel (47) umfasst, das in Form einer Spirale rund um die Stange (16) gewunden ist und sich von der Außenseite des Ventils zum elektromagnetischen Kreislauf (46) hinführend erstreckt.

## Revendications

1. Vanne (1) pour fluides, comprenant :
- une ouverture d'entrée (6) d'un fluide se prolongeant le long d'un axe d'extension (12) respectif ;
- une ouverture de sortie (7) du fluide se prolongeant le long d'un axe d'extension (4) respectif positionné transversalement à l'axe d'extension (12) de l'ouverture d'entrée (6) ;
- un obturateur (11) fonctionnellement associé à l'ouverture d'entrée (6) et mobile entre une position d'ouverture et une position de fermeture de l'ouverture d'entrée (6) le long de l'axe d'extension (12) de cette dernière ;
- une unité (15) servant à déplacer l'obturateur (11) le long de l'axe d'extension (12) de l'ouverture d'entrée (6) et fonctionnellement associée à l'obturateur pour le déplacer ; l'unité de déplacement (15) comprenant une tige (16) se prolongeant entre une portion fonctionnelle (17) respective pouvant se mettre en prise avec l'obturateur (11) pour le déplacer et une portion d'entraînement (18) respective opposée à la portion fonctionnelle (17) ;
- l'obturateur (11) définit un écartement (33) placé en communication fluidique avec l'ouverture d'entrée (6) et se prolongeant à travers l'obturateur (11) vers un espace transitoire (32) étant fermé, au moins pendant la position fermée de l'obturateur, par rapport à l'ouverture de sortie ; l'espace transitoire (32) se prolongeant le long de l'axe d'extension (12) à partir d'une paroi de fond (10) de la vanne jusqu'à une surface de contact (51) à l'intérieur de l'obturateur (11) de manière à ce que le fluide pénètre de l'ouverture d'entrée (6) vers l'espace transitoire (32) à travers l'écartement (33) et agit sur l'obturateur (11) dans la direction opposée au fluide agissant directement sur l'obturateur à partir de l'ouverture d'entrée (6) ;
- **caractérisée en ce qu'**elle comprend des moyens (42) servant à entraîner la tige (16) associés à la portion d'entraînement (18) de la tige (16); les moyens d'entraînement (42) comprenant un élément électromagnétique (44) pour déplacer la tige (16) le long d'une première direction (19) ou le long d'une seconde direction (21) ; et **en ce que** les moyens d'entraînement (42) de la tige (16) comprennent un système à bobine mobile.

2. Vanne (1) pour fluides selon la revendication 1, **caractérisée en ce que** l'obturateur (11) comporte un trou passant (22) plaçant l'ouverture d'entrée (6) en communication avec l'espace transitoire (32) ; l'écartement (33) étant au moins partiellement formé dans le trou passant (22).

3. Vanne (1) pour fluides selon l'une quelconque des revendications précédentes, lorsqu'elle dépend de la revendication 2, **caractérisée en ce que** l'unité de déplacement (15) est insérée à l'intérieur du trou passant (22) et l'écartement (33) est formé entre l'unité de déplacement (15) et le trou passant (22).

4. Vanne (1) pour fluides selon la revendication 3, **caractérisée en ce que** l'unité de déplacement (15) comprend une tige (16) se prolongeant entre une portion fonctionnelle (17) respective pouvant se mettre en prise avec l'obturateur (11) pour le déplacer et une portion d'entraînement (18) respective opposée à la portion fonctionnelle (17) ; le trou passant (22) ayant une largeur étant supérieure à une largeur respective de la tige (16) de manière à laisser un écartement (33) entre l'obturateur (11) et la tige (16) pour le passage du fluide.

5. Vanne (1) pour fluides selon la revendication 4, **caractérisée en ce que** l'unité de déplacement (15) comprend des moyens de traction (23) fixés à la portion fonctionnelle (17) de la tige (16) pour tirer l'obturateur (11) de la position fermée à la position ouverte.

6. Vanne (1) pour fluides selon la revendication 5, **caractérisée en ce qu'**elle comprend des premiers moyens d'étanchéité (24) et des seconds moyens d'étanchéité (25) positionnés entre l'obturateur (11) et l'ouverture de sortie (7); les seconds moyens d'étanchéité (25) étant espacés par rapport aux premiers moyens d'étanchéité (24) le long de l'axe d'extension (12) de l'ouverture d'entrée (6).

7. Vanne (1) selon la revendication 6, **caractérisée en ce que** les seconds moyens d'étanchéité (25) comprennent une première partie (29) reliée à une chambre intermédiaire (5) et une seconde partie (30) reliée à l'obturateur (11).

8. Vanne (1) selon la revendication 7, **caractérisée en ce que** la seconde partie (30) des seconds moyens d'étanchéité (25) comporte une partie en saillie le long d'une direction transversale à la direction de mouvement (12) ; la première partie (29) des seconds moyens d'étanchéité (25) comportant une protubérance à accoupler à la partie en saillie des seconds moyens d'étanchéité (25) pendant la position fermée de l'obturateur (11).

9. Vanne (1) selon la revendication 7 ou 8, **caractérisée en ce que** les premiers moyens d'étanchéité (24) et la seconde partie (30) des seconds moyens d'étanchéité (25) comprennent des corps séparés.

10. Vanne (1) selon la revendication 7 ou 8, **caractérisée en ce que** les premiers moyens d'étanchéité (24) et la seconde partie (30) des seconds moyens d'étanchéité (25) sont formés par un seul corps ; entre les premiers moyens d'étanchéité (24) et la seconde partie (30) des seconds moyens d'étanchéité (25) se trouve une portion annulaire (31) de faiblesse formant une zone souple des moyens d'étanchéité.

11. Vanne (1) selon l'une quelconque des revendications précédentes, **caractérisée en ce qu'**elle comprend des moyens élastiques (38) positionnés entre l'obturateur (11) et la paroi de fond (10) de l'espace transitoire (32) ; les moyens élastiques (38) étant étendus pendant la position fermée de l'obturateur (11) et comprimés pendant la position ouverte de l'obturateur (11) de manière à faciliter le retour de l'obturateur (11) de la position d'ouverture à la position de fermeture.

12. Vanne (1) selon l'une quelconque des revendications dépendant de la revendication 7, **caractérisée en ce qu'**elle comprend des seconds moyens élastiques (40) positionnés entre la seconde partie (30) des seconds moyens d'étanchéité (25) et la paroi de fond (10) ; les seconds moyens élastiques (40) étant au moins partiellement comprimés de manière à maintenir la seconde partie (30) des seconds moyens d'étanchéité (25) en butée contre la première partie (29) des seconds moyens d'étanchéité (25) pendant la position fermée de l'obturateur (11).

13. Vanne (1) selon l'une quelconque des revendications précédentes dépendant de la revendication 3, **caractérisée en ce que** l'élément électromagnétique (44) comprend un aimant (45) en position fixe par rapport à la tige (16) et un circuit électromagnétique (46) relié à la portion d'entraînement (18) de la tige (16) ; le circuit électromagnétique (46) étant fonctionnellement associé à l'aimant (45) pouvant se rapprocher ou s'éloigner de celui-ci pour déplacer la tige.

14. Vanne (1) selon la revendication 13, **caractérisée en ce que** le circuit électromagnétique (46) comprend au moins un câble d'alimentation (47) enroulé sous forme d'une spirale autour de la tige (16) et se prolongeant de l'extérieur de la vanne vers le circuit électromagnétique (46).
